# EUROPÄISCHE PATENTANMELDUNG

(11) **EP 1 728 690 A1**
(43) Veröffentlichungstag der Anmeldung: **06.12.2006**
(21) Anmeldenummer: 06008874.7
(22) Anmeldetag: 28.04.2006
(51) Int. Cl.: B60R 21/20

(54) **Fahrzeuglenkrad mit Gassackmodul und Hupenkontakt**

(30) Priorität: 30.05.2005 DE 202005008374 U
(71) Anmelder: TRW Automotive Safety Systems GmbH, 63743 Aschaffenburg (DE)
(72) Erfinder: Frisch, Ralph, 63776 Mömbris (DE); Bohn, Stefan, 63773 Goldbach (DE)
(74) Vertreter: Strass, Jürgen

(57) **Zusammenfassung**

Ein Fahrzeuglenkrad umfaßt ein Gassackmodul (10), das eine Abdeckkappe (20) mit einem zentralen Abschnitt (36) und einem äußeren Randabschnitt (38) aufweist, und wenigstens einen Hupenkontakt (22). Der Hupenkontakt (22) weist ein zwischen dem zentralen Abschnitt der Abdeckkappe (36) und einem stationären Bauteil des Gassackmoduls (10) angeordnetes Kontaktelement (46) auf, so daß durch ein Niederdrücken des zentralen Abschnitts der Abdeckkappe (36) um einen bestimmten Hub der Hupenkontakt (22) geschlossen wird.

## Beschreibung

Die Erfindung betrifft ein Fahrzeuglenkrad, mit einem Gassackmodul, das eine Abdeckkappe mit einem zentralen Abschnitt und einem äußeren Randabschnitt aufweist, und wenigstens einem Hupenkontakt.

Zur Betätigung der Hupe sind bei Lenkrädern mit Gassackmodul neben Konstruktionen, bei denen das gesamte Gassackmodul niedergedrückt wird (Floating Module), auch Lösungen bekannt, bei denen nur die dem Fahrer zugewandte Abdeckkappe des Gassackmoduls relativ zu den stationären Bauteilen des Gassackmoduls bewegt wird (Floating Cover). Gemäß letzterem Konzept sind die Hupenkontakte in der Regel am Modulboden oder am Rand der Abdeckkappe angeordnet. Unter dem zentralen Bereich der Abdeckkappe ist zwischen dem Gassack und der Abdeckkappe ein Hohlraum vorgesehen, um die Hubbewegung der Abdeckkappe nicht zu behindern. Um bei einer Hupenbetätigung ein Durchbiegen der Abdeckkappe im zentralen Bereich zu vermeiden, ist es bekannt, die Abdeckkappe in diesem Bereich zu verstärken.

Es hat sich jedoch gezeigt, daß bei hohen Temperaturen auch verstärkte Abdeckkappen sehr nachgiebig werden. Dadurch entsteht ein "schwammiges" Druckgefühl, da der Fahrer aufgrund des Hohlraums unter der Abdeckkappe das Gefühl hat, ins Leere zu drücken. Biegt sich der zentrale Bereich der Abdeckkappe bei Betätigung so weit durch, daß er auf das darunterliegende Gassackpaket drückt, bevor die Hupenkontakte geschlossen werden, ist die Auslösung der Hupe entweder gar nicht oder nur mit erhöhtem Kraftaufwand möglich, nämlich durch Komprimieren des Gassackpakets.

Außerdem ist zu berücksichtigen, daß von verstärkten Abdeckkappen ein erhöhtes Gefährdungspotential ausgeht, wenn im verstärkten Bereich eine oder mehrere Klappen für den Gassackaustritt vorgesehen sind. Zum einen muß der Scharnierbereich der Klappen so ausgelegt werden, daß ein Abreißen der Klappen verhindert wird; aufgrund der höheren Masse der Klappen wirken nämlich beim Öffnen größere Fiiehkräfte. Zum anderen können sich versteifte Klappen ungünstig auswirken, wenn sich der Fahrer sehr dicht vor dem Lenkrad befindet und beim Öffnen der Klappen direkt mit diesen in Kontakt kommt.

Aufgabe der Erfindung ist es, bei einer Floating-Cover-Konstruktion eine zuverlässige Hupenbetätigung mit einem Druckpunkt in der Mitte der Abdeckkappe zu ermöglichen, ohne die Nachteile einer verstärkten Abdeckkappe in Kauf nehmen zu müssen.

Bei einem Fahrzeuglenkrad der eingangs genannten Art wird dies erfindungsgemäß dadurch erreicht, daß der Hupenkontakt ein zwischen dem zentralen Abschnitt der Abdeckkappe und einem stationären Bauteil des Gassackmoduls angeordnetes Kontaktelement aufweist, so daß durch ein Niederdrücken des zentralen Abschnitts der Abdeckkappe um einen bestimmten Hub der Hupenkontakt geschlossen wird. Die Erfindung geht von der Erkenntnis aus, daß Gassackmodul-Konstruktionen realisierbar sind, bei denen ein stationäres Bauteil unmittelbar unter dem zentralen Abschnitt der Abdeckkappe angeordnet ist. Die Anordnung des Kontaktelements auf einem solchen Bauteil erlaubt die Bildung eines Hupenkontakts, der durch Niederdrücken des zentralen Abschnitts der Abdeckkappe um einen geringen, definierten Hub geschlossen wird. Dem Fahrer wird dadurch ein reproduzierbares, unverfälschtes Druckgefühl vermittelt. Eine Verstärkung der Abdeckkappe ist nicht erforderlich, so daß bei der Herstellung der Abdeckkappe keine Zusatzkosten entstehen und der Bauraum im Modul nicht eingeschränkt ist.

Vorteilhafte und zweckmäßige Ausgestaltungen des erfindungsgemäßen Fahrzeuglenkrads ergeben sich aus den Unteransprüchen.

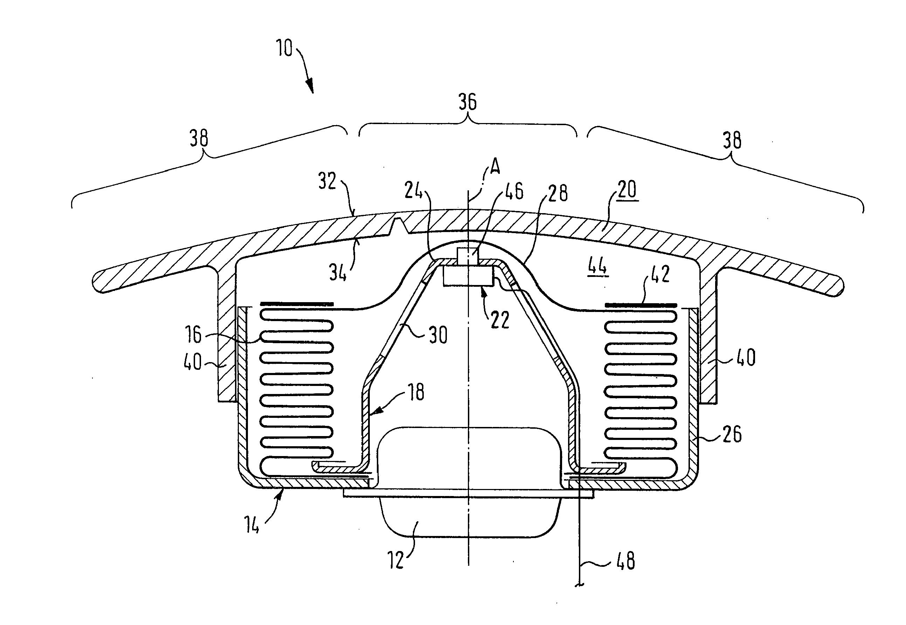

Weitere Merkmale und Vorteile der Erfindung werden aus der nachfolgenden Beschreibung und der beigefügten Zeichnung ersichtlich, auf die Bezug genommen wird. In der Zeichnung zeigt die einzige Figur einen Schnitt durch ein Gassackmodul eines erfindungsgemäßen Lenkrads.

Das in der Figur dargestellte Gassackmodul 10 mit einer Mittelachse A weist als wesentliche Bestandteile einen Gasgenerator 12, einen Generatorträger 14, einen Gassack 16, ein Gassackhalteblech 18, eine Abdeckkappe 20 und einen Hupenkontakt 22 auf. Der Gasgenerator 12 ist in bekannter Weise über einen Generatorflansch am Generatorträger 14 befestigt. Zwischen dem Generatorträger 14 und dem Gassackhalteblech 18 ist der Einblasmund des Gassacks 16 geklemmt.

Das Gassackhalteblech 18 hat einen mittleren Abschnitt, der als Käfig 24 (Diffusor) ausgebildet ist. Der Gassack 16 ist als gefaltetes Gassackpaket im wesentlichen in dem ringförmigen Raum zwischen dem Käfig 24 und dem hochgebogenen Randabschnitt 26 des Generatorträgers 14 untergebracht. Eine Lage 28 des Gassackpakets ist jedoch über den Käfig 24 und den Hupenkontakt 22 geführt. Der Käfig 24 weist mehrere schlitzförmige Ausströmöffnungen 30 auf, über die der Gassack 16 bei Bedarf mit dem vom Gasgenerator 12 bereitgestellten Gas aufgeblasen wird.

Die Abdeckkappe 20 hat eine dem Fahrer zugewandte Vorderseite 32 und eine dem Inneren des Gassackmoduls 10 zugewandte Rückseite 34 und schließt das Gassackmodul 10 auf der dem Fahrer zugewandten Seite ab. Die Abdeckkappe 20 hat einen zentralen Abschnitt 36, der dem Käfig 24 gegenüberliegt, und einen äußeren Randbereich 38 mit einem umlaufenden oder mehreren Seitenwandabschnitten 40, der bzw. die im wesentlichen parallel zum Randabschnitt 26 des Generatorträgers 14 verläuft bzw. verlaufen. Die Abdeckkappe 20 weist in bekannter Weise eine oder mehrere Klappen zur Bereitstellung einer Austrittsöffnung für den Gassack 16 auf, hat aber keine besonderen Verstärkungen. Der Generatorträger 14 mit den darin befestigten Teilen ist stationär, wogegen die Abdeckkappe 20 in Richtung der Achse A verschiebbar ist.

Der Käfig 24 des Gassackmoduls 10 ist so ausgeführt, daß er bis knapp an die Rückseite 34 des zentralen Abschnitts 36 der Abdeckkappe 20 heranreicht. Der Gassack 16 ist so in einer Hülle 42 (z.B. aus Tyvek-Vlies) fixiert, daß zwischen dem ringförmigen Gassackpaket und der Abdeckkappe 20 ein definierter Hohlraum 44 gebildet ist. Am mittleren Abschnitt des Käfigs 24 ist ein Hupenkontaktelement 46 angebracht, das dem zentralen Abschnitt 36 der Abdeckkappe 20 zugewandt ist. Das Kontaktelement 46 kann z.B. ein Mikroschalter oder eine Kontaktfolie sein. Die elektrische Anbindung des Kontaktelements 46 erfolgt über ein Kabel 48, das über eine der Ausströmöffnungen 30 auf die Außenseite und durch das Gassackhalteblech 18 und den Gassack 16 aus dem Gassackmodul 10 herausgeführt ist, wobei das Kabel 48 über Crimpverbindungen am Käfig 24 gehalten ist. Die Masseverbindung des Kontakts 22 erfolgt über die Blechteile des Gassackmoduls, insbesondere das Gassackhalteblech 18.

Zur Betätigung der Hupe wird die Abdeckkappe 20 parallel zur Achse A in Richtung des Modulinneren niedergedrückt. Nach einem bestimmten Hub drückt der zentrale Abschnitt 36 der Abdeckkappe 20 indirekt über die einzelne Gassacklage 28 auf das Kontaktelement 46, so daß der Hupenkontakt 22 geschlossen wird. Die Fixierung des Gassacks 16 durch die Hülle 42 gewährleistet, daß die Abdeckkappe 20 beim Niederdrücken nicht in Berührung mit dem restlichen Gassackpaket kommt. Um Beschädigungen des Gassacks 16 durch das Kontaktelement 46 zu vermeiden, kann an der entsprechenden Stelle der Gassacklage 28 eine Verstärkung vorgesehen sein.

Alternativ kann das Kontaktelement 46 auch auf der Rückseite 34 des zentralen Abschnitts 36 der Abdeckkappe 20 angebracht sein, so daß es beim Niederdrücken gegen den mittleren Abschnitt des Käfigs 24 gedrückt wird.

Ergänzend können in bekannter Weise zusätzliche Hupenkontakte am Rand der Abdeckkappe 20 oder am Boden des Gassackmoduls 10 vorgesehen sein.

Der Käfig 24 mit seinen Ausströmöffnungen 30 ist so ausgelegt, daß er im Falle eines Sekundäraufpralls des Fahrers auf das Lenkrad bei erschlafftem Gassack 16 als energieaufnehmendes Deformationselement dient.

## Patentansprüche

1. Fahrzeuglenkrad, mit einem Gassackmodul (10), das eine Abdeckkappe (20) mit einem zentralen Abschnitt (36) und einem äußeren Randabschnitt (38) aufweist, und wenigstens einem Hupenkontakt (22), **dadurch gekennzeichnet, daß** der Hupenkontakt (22) ein zwischen dem zentralen Abschnitt der Abdeckkappe (36) und einem stationären Bauteil des Gassackmoduls (10) angeordnetes Kontaktelement (46) aufweist, so daß durch ein Niederdrücken des zentralen Abschnitts der Abdeckkappe (36) um einen bestimmten Hub der Hupenkontakt (22) geschlossen wird.

2. Fahrzeuglenkrad nach Anspruch 1, **dadurch gekennzeichnet, daß** der zentrale Abschnitt (36) der Abdeckkappe (20) axial verschiebbar ist.

3. Fahrzeuglenkrad nach Anspruch 1 oder 2, **dadurch gekennzeichnet, daß** das Kontaktelement (46) ein Mikroschalter ist.

4. Fahrzeuglenkrad nach Anspruch 1 oder 2, **dadurch gekennzeichnet, daß** das Kontaktelement (46) eine Kontaktfolie ist.

5. Fahrzeuglenkrad nach einem der vorhergehenden Ansprüche, **dadurch gekennzeichnet, daß** das Kontaktelement (46) auf dem stationären Bauteil angebracht ist.

6. Fahrzeuglenkrad nach einem der vorhergehenden Ansprüche, **dadurch gekennzeichnet, daß** das stationäre Bauteil ein über einem Gasgenerator (12) angeordneter Käfig (24) ist.

7. Fahrzeuglenkrad nach Anspruch 6, **dadurch gekennzeichnet, daß** die elektrische Anbindung des Hupenkontakts (22) über ein Kabel (48) erfolgt, das an der Außenseite des Käfigs (24) gehalten ist.

8. Fahrzeuglenkrad nach Anspruch 6 oder 7, **dadurch gekennzeichnet, daß** der Käfig (24) Ausströmöffnungen (30) aufweist und so ausgelegt ist, daß er bei einem Aufprall eines Fahrzeuginsassen auf das Lenkrad als energieabsorbierendes Deformationselement dient.

9. Fahrzeuglenkrad nach einem der Ansprüche 1 bis 4, **dadurch gekennzeichnet, daß** das Kontaktelement (46) auf der Rückseite (34) der Abdeckkappe (20) angebracht ist.
